# EUROPÄISCHE PATENTSCHRIFT

(11) **EP 3 894 288 B1**
(45) Veröffentlichungstag und Bekanntmachung des Hinweises auf die Patenterteilung: **24.04.2024**
(21) Anmeldenummer: 19783470.8
(22) Anmeldetag: 01.10.2019
(51) Int. Cl.: B60T 8/17

(54) **VERFAHREN UND VORRICHTUNG ZUR DURCHFÜHRUNG EINER AUTONOMEN BREMSUNG BEI EINEM EINSPURIGEN KRAFTFAHRZEUG**
METHOD AND DEVICE FOR PERFORMING AUTONOMOUS BRAKING IN A SINGLE-TRACK MOTOR VEHICLE
PROCÉDÉ ET DISPOSITIF DE MISE EN OEUVRE D'UN FREINAGE AUTONOME POUR UN VÉHICULE À MOTEUR MONOVOIE

(30) Priorität: 13.12.2018 DE 102018221720
(43) Veröffentlichungstag der Anmeldung: 20.10.2021
(73) Patentinhaber: Robert Bosch GmbH, 70442 Stuttgart (DE)
(72) Erfinder: KLEWS, Matthias, 72076 Tuebingen (DE); WAHL, Anja, 71706 Markgroeningen (DE); HENZLER, Markus, 70197 Stuttgart (DE); SCHUMACHER, Jan, 71636 Ludwigsburg (DE)
(86) Internationale Anmeldenummer: PCT/EP2019/076562
(87) Internationale Veröffentlichungsnummer: WO 2020/119976

(56) Entgegenhaltungen:
- WO-A1-2018/154398
- WO-A1-2018/185577
- DE-A1-102012 221 615

## Beschreibung

### Stand der Technik

Die nachveröffentlichte DE 10 2017 210 500 A1 bezieht sich auf ein Verfahren zum Betreiben eines Fahrerassistenzsystems für ein Zweirad, das dadurch gekennzeichnet ist, dass in einem Schritt des Eingreifens das Fahrerassistenzsystem in Abhängigkeit von einem fahrerspezifischen Fahrdynamikprofil und einem momentanen Fahrzustand eingreift, wobei das Fahrdynamikprofil einen Zusammenhang zwischen zurückliegend durch einen Fahrer des Zweirads gefahrenen Schräglagewerten und dabei gefahrenen Beschleunigungswerten abbildet und der Fahrzustand durch einen momentan erfassten Beschleunigungswert und einen momentan erfassten Schräglagenwert gekennzeichnet ist.

Ferner offenbart die DE 10 2012 221 615 A1 ein Verfahren zur Durchführung einer autonomen Bremsung bei einem einspurigen Kraftfahrzeug, bei dem die Notwendigkeit einer Fahrzeugverzögerung detektiert wird, abhängig davon eine fahrerunabhängige Fahrzeugverzögerung eingeleitet wird, nach Einleiten der Fahrzeugverzögerung eine Fahrerbereitschaftsgröße ermittelt wird und abhängig von der Fahrerbereitschaftsgröße der zeitliche Verlauf der Fahrzeugverzögerung fortgesetzt wird.

Darüber hinaus sind aus der WO 2018/185577 A1 sowie der WO 2018/154398 A1 Verfahren zur Durchführung einer autonomen Bremsung bei einem einspurigen Kraftfahrzeug bekannt, wobei die Notwendigkeit einer Fahrzeugverzögerung mittels einer Umfeldsensorik detektiert wird und daraufhin eine fahrerunabhängige Fahrzeugverzögerung eingeleitet wird.

### Offenbarung der Erfindung

Die Erfindung betrifft ein Verfahren zur Durchführung einer autonomen Bremsung bei einem einspurigen Kraftfahrzeug, insbesondere einem Motorrad, bei dem
- mittels einer Umfeldsensorik die Notwendigkeit einer Fahrzeugverzögerung detektiert wird,
- abhängig davon eine fahrerunabhängige Fahrzeugverzögerung eingeleitet wird,
- nach Einleiten der Fahrzeugverzögerung eine die Bereitschaft des Fahrers für die Beherrschung des Fahrzeugverzögerungsmanövers kennzeichnende Fahrerbereitschaftsgröße ermittelt wird und
- abhängig von der Fahrerbereitschaftsgröße der zeitliche Verlauf der Fahrzeugverzögerung fortgesetzt wird.

Die Erfindung erlaubt die Reduzierung der Gefahr bei einer automatischen Notbremsung eines Zweirads. Ein nicht auf die Bremsung vorbereiteter und abgelenkter Fahrer kann in einer solchen Situation völlig die Kontrolle über das Zweirad verlieren, deshalb ist die Einbeziehung einer die Bereitschaft des Fahrers für die Beherrschung des Fahrzeugverzögerungsmanövers kennzeichnenden Fahrerbereitschaftsgröße in das Notbremsmanöver sinnvoll. Eine vorteilhafte Ausgestaltung der Erfindung ist dadurch gekennzeichnet, dass es sich bei der Umfeldsensorik um eine Radarsensorik, eine Lidarsensorik oder eine Videosensorik handelt. Derartige Sensoriken sind im PKW-Bereich bereits weit verbreitet und können im Zweiradbereich mitbenutzt werden.

Erfindungsgemäß nimmt die Fahrerbereitschaftsgröße drei Werte an, wobei
- einer der drei Werte einen für das Fahrzeugverzögerungsmanöver bereiten Zustand des Fahrers signalisiert,
- ein anderer der drei Werte einen neutralen Zustand des Fahrers signalisiert und
- der verbleibende der drei Werte einen für das Fahrzeugverzögerungmanöver nicht bereiten Zustand des Fahrers signalisiert.

Dabei wird
- bei einem bereiten Zustand des Fahrers die autonome Bremsung mit einem geplanten Sollbremskraftverlauf durchgeführt,
- bei einem neutralen Zustand des Fahrers die autonome Bremsung mit einem Bremskraftverlauf durchgeführt, welcher im Vergleich zum geplanten Sollbremskraftverlauf eine geringere Verzögerung und/oder einen geringeren Ruck aufweist.
- bei einem nicht bereiten Zustand des Fahrers die autonome Bremsung entweder abgebrochen oder mit einem Bremskraftverlauf durchgeführt, welcher im Vergleich zum Bremskraftverlauf bei einem neutralen Zustand des Fahrers eine geringere Verzögerung und/oder einen geringeren Ruck aufweist.

Durch die Durchführung der Notbremsung mit einer geringeren Intensität bei einem als nicht bereit erkannten Fahrerzustand kann das Risiko des Sturzes des Fahrers infolge eines Kontrollverlustes über das Zweirad reduziert werden. Dennoch wird durch die schwächere Notbremsung die Aufmerksamkeit eines abgelenkten Fahrers auf die aktuelle Fahrsituation gelenkt, da die Notbremsung zugleich als Fahrerwarnung wirkt.

Eine vorteilhafte Ausgestaltung der Erfindung ist dadurch gekennzeichnet, dass die Fahrerbereitschaftsgröße nach Einleiten der fahrerunabhängigen Fahrzeugverzögerung anhand der Ausgangssignale einer am Kraftfahrzeug angebrachten Inertialsensorik ermittelt wird.

Eine vorteilhafte Ausgestaltung der Erfindung ist dadurch gekennzeichnet, dass die Fahrerbereitschaftsgröße nach Einleiten der fahrerunabhängigen Fahrzeugverzögerung anhand des Lenkwinkels und/oder des Lenkmoments ermittelt wird.

Eine vorteilhafte Ausgestaltung der Erfindung ist dadurch gekennzeichnet, dass die Fahrerbereitschaftsgröße nach Einleiten der fahrerunabhängigen Fahrzeugverzögerung anhand der Ausgangssignale am Kraftfahrzeug angebrachter druckempfindlicher Berührungssensoren ermittelt wird.

Eine vorteilhafte Ausgestaltung der Erfindung ist dadurch gekennzeichnet, dass die Fahrerbereitschaftsgröße nach Einleiten der fahrerunabhängigen Fahrzeugverzögerung anhand der Ausgangssignale von Raddrehzahlsensoren oder Einfederwegsensoren ermittelt wird.

Weiter umfasst die Erfindung eine Vorrichtung, enthaltend Mittel, die zur Durchführung der erfindungsgemäßen Verfahren ausgestaltet sind. Dabei handelt es sich um die hierzu erforderlichen Sensoren sowie ein Steuergerät, in welchem der Programmcode zur Durchführung der erfindungsgemäßen Verfahren hinterlegt ist.

Die Zeichnung umfasst die Figuren 1 bis 3.

In Fig. 1 ist der zeitliche Ablauf einer Ausgestaltung der Erfindung dargestellt.

In Fig. 2 ist ein Zustandsdiagramm für drei Fahrerzustände dargestellt.

In Fig. 3 ist eine schematische Seitenansicht eines Motorrads mit wesentlichen, für die Erfindung nutzbaren Motorradkomponenten dargestellt.

Leitet eine vorausschauende Sensorik ein Bremsmanöver ein, dann kann nach eingeleitetem Bremsmanöver mit Hilfe sich am Fahrzeug befindender Sensoren die Reaktion des aus Fahrzeug und Fahrer bestehenden Gesamtsystems ermittelt werden. Aus dieser ermittelten Reaktion lässt sich der aktuelle Zustand des Fahrers modellieren. In Abhängigkeit dieses Fahrerzustands kann das weitere Bremsmanöver parametriert werden. Wird festgestellt, dass der Fahrer nicht bremsbereit ist, dann wird die Verzögerung reduziert oder ganz zurückgenommen, damit das Manöver kontrollierbar bleibt. Dadurch, dass das automatische Bremsmanöver bereits beginnt, bevor die Bewertung des Fahrers abgeschlossen ist, kann bei Notbremsungen mit starker Verzögerung ein erheblicher Bremsweg eingespart werden.

Bei der vorausschauenden Sensorik bzw. Umfeldsensorik kann es sich um eine Radar-, eine Lidar- oder eine Videosensorik handeln. Zudem können in Zukunft vernetzte Systeme als virtuelle Sensoren angesehen werden, welche ein autonomes Bremsmanöver einleiten können.

Anhand der Ausgangssignale der Umfeldsensorik wird eine Sollverzögerung ermittelt und ein Triggersignal an das Bremssystem gesendet, welches das Bremsmanöver einleitet. Das Bremssystem leitet die Verzögerung über eine Motormomentabsenkung oder eine Bremsmomenterhöhung ein, ohne zunächst den Zustand des Fahrers zu kennen. Insbesondere kann ein neutraler Fahrerzustand angenommen werden. Durch Messung der Gesamtsystemreaktion kann der Zustand des Fahrers modelliert werden. In einem ersten Schritt kann dazu aus Messergebnissen der Inertialsensorik eine Manöverbereitschaft des Fahrers abgeleitet werden. Wird beispielsweise ein Verzögerungsmoment aufgebracht und der Fahrer hat nur eine Hand am Lenker, dann bewirkt das Abstützmoment des Fahrers eine Lenkerbewegung. Diese Bewegung bewirkt eine Änderung der Dynamik des Gesamtsystems bestehend aus Fahrer und Fahrzeug, welche mit einer Inertialmesstechnik registriert wird. Daraus kann geschlossen werden, dass der Fahrer nur eine Hand fest am Lenker hat und damit nicht bereit für das Verzögerungsmanöver ist.

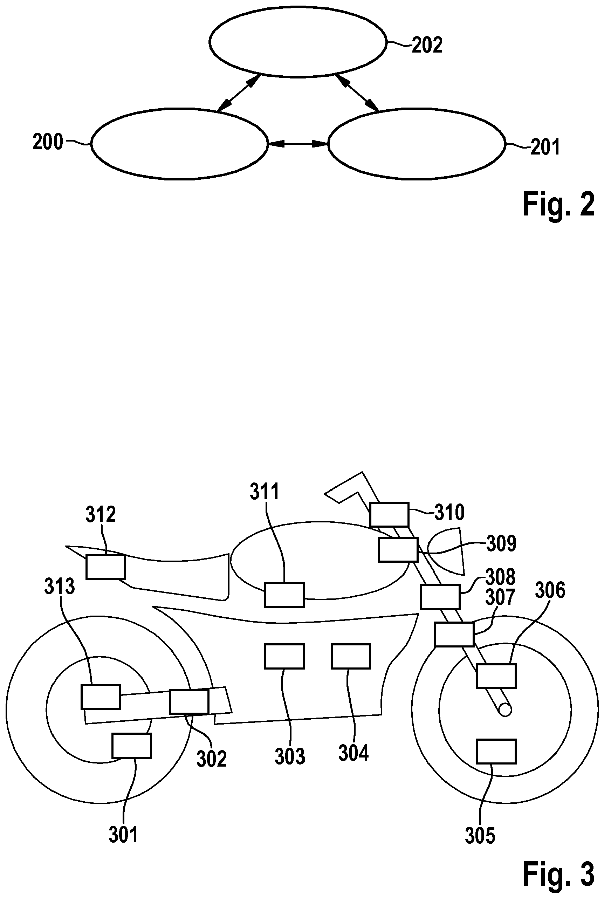

Das Modell des Fahrers kann zum Beispiel drei Zustände beinhalten, wie es in Fig. 2 dargestellt ist. Dort kennzeichnet Block 200 den Zustand "neutral", Block 201 den Zustand "nicht bereit für Manöver" und Block 202 den Zustand "bereit für Manöver".

Abhängig von diesem Zustand wird bei einer ausgelösten Bremsung entweder die Sollbremsung ausgeführt, wenn der Fahrerzustand "bereit für Manöver" detektiert wurde. Falls der Fahrerzustand "nicht bereit für Manöver" ermittelt wurde, wird ein Manöver mit angepasster Verzögerung durchgeführt. Beispielsweise kann der Betrag der Verzögerung bei der angepassten Bremsung gegenüber dem Sollwert reduziert werden. Ergänzend oder alternativ kann der Ruck, d.h. die zeitliche Ableitung der Verzögerung, reduziert werden. Wechselt im Verlauf des Manövers der Zustand des Fahrers, dann kann auch das Bremsmanöver entsprechend variiert werden.

Weiterhin können zur Ermittlung des Fahrerzustands die folgenden Sensorsignale ausgewertet werden:
- anhand des Lenkwinkels und/oder des Lenkmoments kann eine Lenkreaktion des Fahrzeugs ermittelt werden,
- mittels einer Federwegsensorik kann die Nickbewegung des Fahrzeugs ermittelt werden,
- Raddrehzahlsensoren,
- druckempfindliche Berührungssensoren, um das Maß der Abstützung an Kontaktpunkten wie z.B. an Griffen, Knien oder Füßen zu messen.

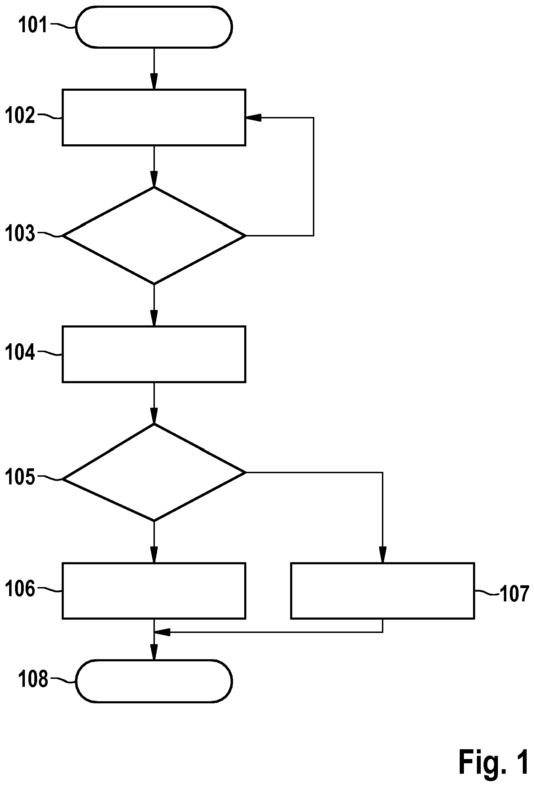

Fig. 1 zeigt den zeitlichen Ablauf einer Ausgestaltung der Erfindung. Nach dem Start des Verfahrens in Block 101 wird in Block 102 eine Umfelderfassung durchgeführt. Bei dieser wird ermittelt, ob eine automatische Bremsung bzw. Notbremsung erforderlich ist. Ist dies der Fall, dann wird in Block 103 eine automatische Bremsung gestartet. Ist keine Bremsung erforderlich, dann wird von Block 103 zu Block 102 zurückgekehrt. Anhand während der Bremsung erfasster Daten wird in Block 104 mittels eines Fahrerzustandsmodells die momentane Bereitschaft des Fahrers zur Beherrschung der automatischen Bremsung ermittelt. Abhängig davon in Block 105 über den weiteren Verlauf der Bremsung entschieden. In Fig. 1 werden dazu beispielhaft zwei mögliche zeitliche Bremskraftverläufe verwendet. Wird der Fahrerzustand als bremsbereit ermittelt, dann wird in Block 106 die begonnene automatische Bremsung wie geplant mit ihrem Sollverlauf fortgeführt. Wird der Fahrerzustand hingegen als nicht bremsbereit ermittelt, dann wird in Block 107 die begonnene automatische Bremsung nur in abgeschwächter Form ausgeführt oder sogar abgebrochen. In Block 108 endet das Verfahren.

Fig. 2 zeigt in Form eines Zustandsgraphen beispielhaft die folgenden Zustände:
Block 200: Fahrerzustand neutral
Block 201: Fahrerzustand "nicht bereit für automatisches Bremsmanöver"
Block 202: Fahrerzustand "bereit für automatisches Bremsmanöver"

Die beidseitig gerichteten Pfeilverbindungen zwischen den drei Zuständen weisen darauf hin, dass auch ein Übergang zwischen den unterschiedlichen Zuständen möglich ist, wenn sich der Fahrerzustand während des automatischen Bremsmanövers ändert.

In Fig. 3 ist eine schematische Seitenansicht eines Motorrads mit den folgenden wesentlichen, für die Erfindung nutzbaren Motorradkomponenten dargestellt.
301: Hinterradbremse
302: Federwegsensor am Hinterrad
303: Bremssteuergerät
304: Motorsteuergerät
305: Vorderradbremse
306: Raddrehzahlsensor am Vorderrad
307: Federwegsensor am Vorderrad
308: Umgebungssensor
309: Lenkwinkelsensor
310 Lenkmomentensensor
311: Auswerteeinheit für den Fahrerzustand
312: Inertialmesstechnik
313: Raddrehzahlsensor am Vorderrad

## Patentansprüche

1. Verfahren zur Durchführung einer autonomen Bremsung bei einem einspurigen Kraftfahrzeug, bei dem
- mittels einer Umfeldsensorik (308) die Notwendigkeit einer Fahrzeugverzögerung detektiert wird (102),
- abhängig davon eine fahrerunabhängige Fahrzeugverzögerung eingeleitet wird (103),
- nach Einleiten der Fahrzeugverzögerung (103) eine die Bereitschaft des Fahrers für die Beherrschung des Fahrzeugverzögerungsmanövers kennzeichnende Fahrerbereitschaftsgröße ermittelt wird (104) und
- abhängig von der Fahrerbereitschaftsgröße der zeitliche Verlauf der Fahrzeugverzögerung fortgesetzt wird (106, 107),
**dadurch gekennzeichnet, dass**
die Fahrerbereitschaftsgröße drei Werte annehmen kann, wobei
- einer der drei Werte einen für das Fahrzeugverzögerungsmanöver bereiten Zustand des Fahrers signalisiert (202),
- ein anderer der drei Werte einen neutralen Zustand des Fahrers signalisiert (200) und
- der verbleibende der drei Werte einen für das Fahrzeugverzögerungsmanöver nicht bereiten Zustand des Fahrers signalisiert (201), und dass
- bei einem bereiten Zustand des Fahrers (202) die autonome Bremsung mit einem geplanten Sollbremskraftverlauf durchgeführt wird (106),
- bei einem neutralen Zustand des Fahrers (200) die autonome Bremsung mit einem Bremskraftverlauf durchgeführt wird, welcher im Vergleich zum geplanten Sollbremskraftverlauf eine geringere Verzögerung und/oder einen geringeren Ruck aufweist,
- bei einem nicht bereiten Zustand (201) des Fahrers die autonome Bremsung entweder abgebrochen wird oder mit einem Bremskraftverlauf durchgeführt wird, welcher im Vergleich zum Bremskraftverlauf bei einem neutralen Zustand des Fahrers eine geringere Verzögerung und/oder einen geringeren Ruck aufweist (107).

2. Verfahren nach Anspruch 1, **dadurch gekennzeichnet, dass** es sich bei der Umfeldsensorik (308) um eine Radarsensorik, eine Lidarsensorik oder eine Videosensorik handelt.

3. Verfahren nach Anspruch 1, **dadurch gekennzeichnet, dass** die Fahrerbereitschaftsgröße (200, 201, 202) nach Einleiten der fahrerunabhängigen Fahrzeugverzögerung anhand der Ausgangssignale einer am Kraftfahrzeug angebrachten Inertialsensorik ermittelt wird (312).

4. Verfahren nach Anspruch 1, **dadurch gekennzeichnet, dass** die Fahrerbereitschaftsgröße (200, 201, 202) nach Einleiten der fahrerunabhängigen Fahrzeugverzögerung anhand des Lenkwinkels (309) und/oder des Lenkmoments (310) ermittelt wird.

5. Verfahren nach Anspruch 1, **dadurch gekennzeichnet, dass** die Fahrerbereitschaftsgröße (200, 201, 202) nach Einleiten der fahrerunabhängigen Fahrzeugverzögerung anhand der Ausgangssignale am Kraftfahrzeug angebrachter druckempfindlicher Berührungssensoren ermittelt wird.

6. Verfahren nach Anspruch 1, **dadurch gekennzeichnet, dass** die Fahrerbereitschaftsgröße (200, 201, 202) nach Einleiten der fahrerunabhängigen Fahrzeugverzögerung anhand der Ausgangssignale von Raddrehzahlsensoren (306, 313) oder Einfederwegsensoren (302, 307) ermittelt wird.

7. Vorrichtung, enthaltend ein Steuergerät (303), das zur Durchführung der erfindungsgemäßen Verfahren ausgestaltet ist.

## Claims

1. Method for carrying out autonomous braking in the case of a single-track motor vehicle, in which
- the need for a vehicle deceleration is detected (102) by means of an environment sensor system (308),
- depending on that, rider-independent vehicle deceleration is initiated (103),
- once the vehicle deceleration has been initiated (103), a rider readiness variable characterizing the readiness of the rider to control the vehicle deceleration manoeuvre is ascertained (104) and
- depending on the rider readiness variable, the temporal progression of the vehicle deceleration is continued (106, 107),
**characterized in that**
the rider readiness variable can assume three values, wherein
- one of the three values signals a state of the rider in which the rider is ready for the vehicle deceleration manoeuvre (202),
- another of the three values signals a neutral state of the rider (200), and
- the remaining one of the three values signals a state of the rider in which the rider is not ready for the vehicle deceleration manoeuvre (201), and **in that**
- in the case of a ready state of the rider (202), the autonomous braking is carried out with a planned setpoint braking force progression (106),
- in the case of a neutral state of the rider (200), the autonomous braking is carried out with a braking force progression which has a lower deceleration and/or a less intense jolt in comparison with the planned setpoint braking force progression,
- in the case of an unready state (201) of the rider, the autonomous braking is either discontinued or is carried out with a braking force progression which has a lower deceleration and/or a less intense jolt in comparison with the braking force progression in the case of a neutral state of the rider (107).

2. Method according to Claim 1, **characterized in that** the environment sensor system (308) is a radar sensor system, a lidar sensor system or a video sensor system.

3. Method according to Claim 1, **characterized in that** the rider readiness variable (200, 201, 202) is ascertained after initiating the rider-independent vehicle deceleration on the basis of the output signals of an inertial sensor system mounted on the motor vehicle (312) .

4. Method according to Claim 1, **characterized in that** the rider readiness variable (200, 201, 202) is ascertained after initiating the rider-independent vehicle deceleration on the basis of the steering angle (309) and/or the steering torque (310).

5. Method according to Claim 1, **characterized in that** the rider readiness variable (200, 201, 202) is ascertained after initiating the rider-independent vehicle deceleration on the basis of the output signals of pressure-sensitive contact sensors mounted on the motor vehicle.

6. Method according to Claim 1, **characterized in that** the rider readiness variable (200, 201, 202) is ascertained after initiating the rider-independent vehicle deceleration on the basis of the output signals of wheel-speed sensors (306, 313) or compression-travel sensors (302, 307).

7. Device, including a control unit (303) which is designed for carrying out the method according to the invention.

## Revendications

1. Procédé permettant d'effectuer un freinage autonome avec un véhicule à moteur monovoie, dans lequel
- la nécessité d'une décélération de véhicule est détectée (102) au moyen d'un système de capteurs d'environnement (308),
- en fonction de cela, une décélération de véhicule, indépendante du conducteur, est initiée (103),
- une fois la décélération de véhicule (103) initiée, une grandeur de disponibilité de conducteur caractérisant le fait que le conducteur est prêt à maîtriser la manoeuvre de décélération de véhicule est déterminée (104), et
- en fonction de la grandeur de disponibilité de conducteur, le déroulement dans le temps de la décélération de véhicule se poursuit (106, 107), **caractérisé en ce que** la grandeur de disponibilité de conducteur peut prendre trois valeurs, dans lequel
- l'une des trois valeurs signale (202) un état du conducteur prêt pour la manoeuvre de décélération de véhicule,
- une autre des trois valeurs signale un état neutre du conducteur (200), et
- la valeur restante des trois valeurs signale (201) un état du conducteur non prêt pour la manoeuvre de décélération de véhicule, et **en ce que**
- dans un état prêt du conducteur (202), le freinage autonome est effectué (106) avec une courbe de force de freinage de consigne prévue,
- dans un état neutre du conducteur (200), le freinage autonome est effectué avec une courbe de force de freinage qui présente, en comparaison avec la courbe de force de freinage de consigne prévue, une décélération inférieure et/ou un à-coup inférieur,
- dans un état non prêt (201) du conducteur, le freinage autonome est soit abandonné, soit effectué avec une courbe de force de freinage qui présente (107), en comparaison avec la courbe de force de freinage dans un état neutre du conducteur, une décélération inférieure et/ou un à-coup inférieur.

2. Procédé selon la revendication 1, **caractérisé en ce que** le système de capteurs d'environnement (308) est un système de capteurs radar, un système de capteurs lidar ou un système de capteurs vidéo.

3. Procédé selon la revendication 1, **caractérisé en ce que** la grandeur de disponibilité de conducteur (200, 201, 202) est déterminée (312) à l'aide des signaux de sortie d'un système de capteurs inertiels installé sur le véhicule à moteur, une fois la décélération de véhicule indépendante du conducteur initiée.

4. Procédé selon la revendication 1, **caractérisé en ce que** la grandeur de disponibilité de conducteur (200, 201, 202) est déterminée à l'aide de l'angle de braquage (309) et/ou du couple de braquage (310), une fois la décélération de véhicule indépendante du conducteur initiée.

5. Procédé selon la revendication 1, **caractérisé en ce que** la grandeur de disponibilité de conducteur (200, 201, 202) est déterminée à l'aide des signaux de sortie de capteurs de contact sensibles à la pression, installés sur le véhicule à moteur, une fois la décélération de véhicule indépendante du conducteur initiée.

6. Procédé selon la revendication 1, **caractérisé en ce que** la grandeur de disponibilité de conducteur (200, 201, 202) est déterminée à l'aide des signaux de sortie de capteurs de vitesse de rotation de roue (306, 313) ou de capteurs de course de compression de ressort (302, 307), une fois la décélération de véhicule indépendante du conducteur initiée.

7. Dispositif, comprenant un appareil de commande (303) qui est configuré pour exécuter le procédé selon l'invention.
